(19) Europäisches Patentamt
European Patent Office
Office européen des brevets

(11) **EP 2 391 832 B1**

(12) **EUROPÄISCHE PATENTSCHRIFT**

(45) Veröffentlichungstag und Bekanntmachung des Hinweises auf die Patenterteilung:
**06.11.2013   Patentblatt 2013/45**

(21) Anmeldenummer: **10702477.0**

(22) Anmeldetag: **01.02.2010**

(51) Int Cl.:
**F16D 3/205** (2006.01)

(86) Internationale Anmeldenummer:
**PCT/EP2010/051149**

(87) Internationale Veröffentlichungsnummer:
**WO 2010/086434 (05.08.2010 Gazette 2010/31)**

(54) **GLEICHLAUFDREHGELENK MIT VERBESSERTEN MONTAGEEIGENSCHAFTEN**

CV JOINT WITH IMPROVED ASSEMBLY PROPERTIES

JOINT HOMOCINÉTIQUE À PROPRIÉTÉS DE MONTAGE AMÉLIORÉES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **02.02.2009   DE 102009000561**

(43) Veröffentlichungstag der Anmeldung:
**07.12.2011   Patentblatt 2011/49**

(73) Patentinhaber: **Neapco Europe GmbH**
**52351 Düren (DE)**

(72) Erfinder:
• **FELCHNER, Christian**
**42369 Wuppertal (DE)**
• **NEUNZIG, Uwe**
**52372 Kreuzau (DE)**
• **SIMONS, Karl-Heinz**
**52399 Merzenich (DE)**

(74) Vertreter: **Bauer Vorberg Kayser**
**Patentanwälte**
**Goltsteinstrasse 87**
**50968 Köln (DE)**

(56) Entgegenhaltungen:
EP-A1- 0 790 425       EP-A1- 1 286 069
EP-A2- 1 413 787       WO-A1-2007/088955
WO-A1-2007/132963      WO-A1-2008/080439
DE-A1- 4 327 606       DE-A1- 10 015 957
DE-A1-102008 013 573

**Beschreibung**

Die vorliegende Erfindung betrifft Gleichlaufdrehgelenke mit den Merkmalen des Oberbegriffs der Hauptansprüche. Solche Gleichlaufdrehgelenke, die beispielsweise zum Einsatz in Kraftfahrzeugen vorgesehen sind, auch unter der Bezeichnung homokinetische Drehgelenke bekannt. Aus der EP 1413787 ist ein gattungsgemäßes Gleichlaufdrehgelenk bekannt.

Aus der DE 103 25 116 A1 ist ein weiteres Gleichlaufdrehgelenk bekannt, welches seinerseits auf einem weiteres Gleichlaufdrehgelenk basiert, welches aus der DE 102 06 733 A1 bekannt ist. Das in der DE 10325116 A offenbarte Gleichlaufdrehgelenk weist ein glockenförmiges Gelenkaußenteil mit drei über den Umfang verteilten und sich in Axialrichtung erstreckenden Bahnen auf. In diesem ist ein Gelenkinnenteil mit drei über den Umfang verteilten und sich in Radialrichtung erstreckenden Drehzapfen angeordnet, die eine Rollentragfläche aufweisen. Die Drehzapfen sind dazu vorgesehen, mit den Bahnen im Gelenkaußenteil in Eingriff zu gelangen. Hierzu sind zwischen Gelenkaußenteil und Gelenkinnenteil sog. Rollen angeordnet, wobei eine Rolle jeweils einen Innenring mit einer Rolleninnenfläche aufweisen, deren Formgebung so an die Rollentragfläche der Drehzapfen angepasst ist, dass ein in den Innenring eingeführter Drehzapfen des Gelenkinnenteils im Innenring zwar eine Kippbewegung, aber keine lineare Verschiebebewegung ausführen kann. Weiterhin weist ein Rolle einen Außenring mit einer Rollenaußenfläche auf, deren Formgebung so an die Bahnen des Gelenkaußenteils angepasst ist, dass ein in eine Bahn eingeführter Außenring in dieser eine lineare Verschiebebewegung, aber keine Kippbewegung ausführen kann.

Am Innenring sind zwei sich in Radialrichtung nach Außen erstreckende Umfangsflansche ausbildet. Zwischen diesen Umfangsflanschen ist ein Satz von Wälzkörpern, wie etwa Nadellager, positioniert. Die Wälzkörper wälzen auf der zylindrischen Außenfläche des Innenrings ab. Dabei entspricht der Abstand der Umfangsflansche in Axialrichtung im Wesentlichen der Länge L der Wälzkörper. Der  Außenring der Rolle bildet eine zylindrische Innenfläche aus, auf der die Wälzkörper abwälzen. Die Stärke des Außenrings in Axialrichtung, insbesondere die Breite der zylindrischen Innenfläche ist dabei deutlich größer als die Länge L bemessen. Diese Konstruktion erlaubt eine relativ große axiale Verschiebung bzw. Versetzung zwischen dem Innenring und Außenring der Rolle, wobei der Innenring konstruktionsbedingt unabhängig von seiner Verkippung auf dem ihn tragenden Drehzapfen und weiterhin unabhängig von der Position des Außenrings innerhalb der Bahn mit den Rollen stets über ihre gesamte Länge L in Kontakt steht. Diese Art von Rolle wird im Zusammenhang mit der vorliegenden Erfindung als "dynamische Lagerung" bezeichnet und hat sich im praktischen Einsatz vielfältig bewährt.

Die aus der DE 103 25 116 A1 bekannte Konstruktion realisiert besondere Vorteile in Bezug auf Reibungsarmut und vibrationsfreien Lauf des Gleichlaufdrehgelenks. Die aus der genannten Anmeldung bekannte Konstruktion weist jedoch Nachteile bei der Montage auf, falls das Gleichlaufdrehgelenk nicht vollständig vormontiert ausgeliefert werden soll, sondern vielmehr eine Montage des Gelenkinnenteils im Gelenkaußenteil z.B. erst während der Endmontage des Kraftfahrzeugs erfolgen soll. Da die Rollen auf den Zapfen des Gelenkinnenteils verschwenkbar sind und darüber hinaus die Außenringe der Rollen gegen die Innenringe axial verschieblich sind, kann eine definierte Montagelage des vormontierten Gelenkinnenteils einschließlich der von den Zapfen getragenen Rollen nicht gewährleistet werden. Vielmehr treten bei der aus der DE 103 25 116 A1 vorbekannten Konstruktion häufig solche Zustände der Rollen bezüglich Kippwinkel und axialer Verschiebung von Außenring gegen Innenring auf, die ein Einführen der Rollen in die Bahnen des Gelenkaußenteils ohne manuelle Winkelkorrektur bzw. Korrektur der axialen Verschiebung von Außenring gegen Innenring praktisch unmöglich macht. Wegen der Zahl der zu justierenden Rollen - nämlich drei je Gelenk - und der ungünstigen Platzverhältnisse unter dem Kfz ist eine solche manuelle Korrektur jedoch häufig praktisch unmöglich.

Hier setzt nun die Erfindung ein, die es sich zur Aufgabe gemacht hat, ein Gleichlaufdrehgelenk anzugeben, welches unter Beibehaltung der positiven Laufeigenschaften des vorgenannten Gleichlaufdrehgelenks eine vereinfachte Endmontage des Gelenks im Rahmen der Montage in einem Kfz z.B. bei dessen Herstellung  ermöglicht.

Gelöst wird diese Aufgabe durch ein Gleichlaufdrehgelenk mit den Merkmalen von Anspruch 1. Die Unteransprüche betreffen vorteilhafte Ausgestaltungen, die im Rahmen des technisch Sinnvollen frei miteinander kombiniert werden können.

Die vorliegende Erfindung stellt ein Gleichlaufdrehgelenk bereit, welches ein Gelenkaußenteil mit drei über den Umfang verteilten und sich in Axialrichtung erstreckenden Bahnen aufweist. In diesem ist ein Gelenkinnenteil mit drei über den Umfang verteilten und sich in Radialrichtung erstreckenden Drehzapfen angeordnet, die jeweils eine Rollentragfläche aufweisen. Die Drehzapfen sind dazu vorgesehen, mit den Bahnen in Eingriff zu gelangen. Zwischen Gelenkaußenteil und Gelenkinnenteil sind Rolle angeordnet, wobei die Rolle jeweils einen Innenring mit einer Rolleninnenfläche aufweisen, deren Formgebung so an die Rollentragfläche der Drehzapfen angepasst ist, dass ein in den Innenring eingeführter Drehzapfen des Gelenkinnenteils in diesem eine Kippbewegung, aber keine lineare Verschiebebewegung ausführen kann. Weiterhin weisen die Rolle einen Außenring mit einer Rollenaußenfläche auf, deren Formgebung so an die Bahnen des Gelenkaußenteils angepasst ist, dass ein in eine Bahn eingeführter Außenring in dieser eine Abrollbewegung, aber keine Kippbewegung ausführen kann. Zwischen dem Innenring und dem Außenring ist eine Vielzahl von Wälzkörpern angeordnet, so dass der Außenring auf dem Innenring abrollen kann. Die Gesamtheit aus Innenring, Außenring und Wälzkörpern wird dabei auch als Rolle des Gleichlaufdrehgelenks bezeichnet.

Der Innenring und der Außenring sind in Axialrichtung gegeneinander verschieblich, wobei in einer ersten Ausgestaltung der Innenring eine Axialführung ausbildet, der die Lage der Wälzkörper relativ zum Innenring in Axialrichtung festlegt. In einer alternativen, aber gleichwertigen Ausgestaltung bildet der Außenring eine Axialführung aus, der die Lage der Wälzkörper relativ zum Außenring in Axialrichtung festlegt.

Erfindungsgemäß bildet nun derjenige Ring der Rolle, welcher nicht die Axialführung für die Wälzkörper ausbildet, einen innenliegenden Verschiebeanschlag sowie einen außenliegenden Verschiebeanschlag aus, die sich in Radialrichtung nach Innen (Ausbildung am Außenring) respektive nach Außen (Ausbildung am Innenring) erstrecken. Diese Verschiebeanschläge begrenzen die Abrollbewegung der Wälzkörper auf der Innenfläche des Außenrings respektive der Außenfläche des Innenrings in Axialrichtung. Auf diese Weise wird die axiale Verschiebbarkeit des Außenrings gegen den Innenring begrenzt.

Beträgt die Länge der Wälzkörper L und der Abstand des innenliegenden Verschiebeanschlags vom außenliegenden Verschiebeanschlag in Axialrichtung d, so wird die axiale Verschiebbarkeit vom Außenring gegen den Innenring auf die Differenz D, nämlich

$$D = d - L$$

begrenzt.

Die erfindungsgemäße Ausbildung von innen- und außenliegenden Verschiebeanschlägen verhindert einerseits sicher ein Auseinanderfallen der Rolle sowohl bei der Endmontage des erfindungsgemäßen Gleichlaufdrehgelenks als auch - in dessen montiertem Zustand - bei hohen Knickwinkeln des Gelenks. Andererseits erlaubt sie es, die axiale Verschiebbarkeit der Rollen des Gelenks auf einen Betrag zu begrenzen, der durch die maximal zu erzielende Abwinklung des Gleichlaufdrehgelenks im praktischen Betrieb erforderlich ist. Die Begrenzung der axialen Verschiebbarkeit der Rolle macht es möglich, die bei einer Zusammenfügung von Gelenkinnenteil und Gelenkaußenteil erforderlichen manuellen Lagekorrektureingriffe an den Rollen deutlich zu vermindern. Hierdurch ergeben sich wesentliche Vorteile bei einer Endmontage des erfindungsgemäßen Gleichlaufdrehgelenks im Rahmen des Einbaus des Gelenks in einem Kfz, insbesondere bei dessen Herstellung.

Besondere Vorteile in Bezug auf die Verschleißfestigkeit der Rolle, bei dem die innenliegenden und außenliegenden Verschiebeanschläge am Außenring ausgebildet sind, ergeben sich, wenn zumindest einer der Verschiebeanschläge, bevorzugt aber beide, die Außenkontur des Innenrings nicht übergreifen.

Sind hingegen die die innenliegenden und außenliegenden Verschiebeanschläge am Innenring der Rolle ausgebildet sind, so hat es sich als vorteilhaft erwiesen, wenn zumindest einer der Verschiebeanschläge, bevorzugt aber beide, die Innenkontur des Außenrings nicht übergreifen.

In beiden Fällen liegt/en der Anschlag / die Anschläge bei einer maximalen axialen Verschiebung der Ringe der Rolle gegeneinander an den drehenden Wälzkörpern und nicht am anderen Ring der Rolle an, was eine deutliche Verringerung der in der Rolle auftretenden Reibung zur Folge hat.

Besonders hohe Standzeiten des erfindungsgemäßen Gleichlaufdrehgelenks lassen sich realisieren, indem der Innenring einstückig - und nicht geteilt - ausgebildet wird. Durch geeignete Formgebung der Köpfe des Gelenkinnenteils als nur teilkugelige Oberflächen kann dennoch eine Montierbarkeit des Innenrings auf den Köpfen des Gelenkinnenteils in einer speziellen Montagelage sichergestellt werden.

In einer bevorzugten Ausgestaltung des erfindungsgemäßen Gleichlaufdrehgelenks ist zum indest einer des innenliegenden Verschiebeanschlags und des außenliegenden Verschiebeanschlags einstückig mit dem Ring der Rolle ausgeformt, an dem sie angeordnet sind. Dabei kann ein Verschiebeanschlag vorteilhaft z.B. als ringförmige Anlageschulter ausgeformt sein. Eine solche kann z.B. vor der Fertigbearbeitung des Innen- bzw. Außenrings ausgeformt werden, so beim Schmieden des Rings bzw. dessen spanender Weiterbearbeitung. Alternativ kann ein Verschiebeanschlag auch nach der Fertigbearbeitung des Innen- bzw. Außenrings ausgeformt werden, z.B. durch ein plastisches Verformen des betreffenden Rings mittels Crimpen oder Verstemmen.

Alternativ kann zumindest einer des innenliegenden Verschiebeanschlags und des Außenliegenden Verschiebeanschlags als separat ausgebildeter Sicherungsring ausgebildet sein. Denkbar ist z.B. die Verwendung eines Federrings, der in eine am Innenring respektive Außenring ausgebildete Nut eingesetzt ist. Weiterhin ist auch die Verwendung einer Ringscheibe, welche auf die zylindrische Innen- bzw. Außenfläche des Außen- respektive Innenrings aufgeschoben wird. Die Position der Ringscheibe kann dann z.B. durch Verstemmen festgelegt werden. Einseitig kann sich die Ringscheibe auch an einer auf der zylindrischen Fläche ausgebildeten Ablageschulter abstützen.

Besondere Vorteile bezüglich der Montage eines erfindungsgemäßen Gleichlaufdrehgelenks ergeben sich in einer weiteren besonders bevorzugten Weiterbildung. In dieser Weiterbildung, die mit jeder der vorstehend beschriebenen Ausgestaltungen einzeln oder in Kombination kombinierbar ist, weisen die jeweils auf einem Drehzapfen gelagerten Innenringe eine Ruhelage auf, in der der Innenring in einer definierten Winkellage zur Zapfenachse mechanisch festgelegt ist. Insbesondere kann die Drehachse R der Rolle hier mit der Zapfenachse Z zusammenfallen, dies ist aber nicht zwingend erforderlich. Insbesondere bedeutet dies, dass zum Verkippen eines Innenrings aus seiner Ruhelage gegen die Zapfenachse Z zumindest einmalig ein definiertes Mindestdrehmoment aufgebracht werden muss.

In einer ersten bevorzugten Weiterbildung der Erfindung ist vorgesehen, die Innenringe elastisch gegen ein Verkippen aus ihrer Ruhelage vorzuspannen, d.h. bei jedem Kippvorgang aus der Ruhelage ist erneut ein definiertes Mindestdrehmoment zu überwinden. Dies kann z.B. über ein federndes Mittel, welches z.B. am Zapfenhals angeordnet sein kann, realisiert werden.

In einer alternativen zweiten bevorzugten Weiterbildung kann auch vorgesehen sein, dass zum Verkippen der Innenringe aus ihrer jeweiligen Ruhelage im Wesentlichen nur einmalig ein definiertes Mindestdrehmoment (Kippmoment) aufgebracht werden muss. Ein solches Verhalten kann hervorgerufen werden über Mittel, die eine mechanische Barriere gegen Verkippen bereitstellen, die durch eine (im Wesentlichen einmalige) plastische Verformung z.B. der Rollentragflächen der Drehzapfen oder der Innenfläche der Innenringe beseitigt wird. Eine solche kann z.B. bei der Inbetriebnahme des Fahrzeugs auftreten.

In einer besonders bevorzugten Weiterbildung ist das vorstehend erwähnte, einmalig oder dauerhaft aufzubringende das Mindestdrehmoment von der Kipprichtung des Innenrings gegen die Zapfenachse abhängig. Hier kann z.B. vorgesehen werden, dass das zum Verkippen in einer Ebene, die in Richtung der Zapfenachse orientiert ist und die Rollentragflächen der Drehzapfen schneidet, erforderliche Drehmoment deutlich höher ist als das zum Verkippen in einer solchen Ebene erforderliche Drehmoment, welche ebenfalls in der Zapfenachse orientiert ist, die Rollentragflächen hingegen aber nicht schneidet.

Bevorzugt ist das vorstehend erwähnte Mittel, welches den Innenring in seiner Ruhelage mechanisch fixiert, im Kontaktbereich zwischen Innenring und Drehzapfen angeordnet ist. Besonders bevorzugt umfasst das Mittel einen Sicherungsring.

Alternativ oder ergänzend kann das Mittel eine oder mehrere geometrische Strukturen umfassen, die sich im Kontaktbereich zwischen Innenring und Drehzapfen von den Rollentragflächen der Drehzapfen und / oder von den Rolleninnenflächen der Innenringe erheben. Solche geometrischen Strukturen können beispielsweise mittels (lokaler) plastischer Verformung der Drehzapfen und /oder der Innenringe, insbesondere nach einer Montage der I nnenringe auf den Drehzapfen, erzeugt werden. Beispielhaft seine hier punktförmige lokale Verformungen (erzeugt mittels Körner) oder auch größere lokale Verformungen (erzeugt mittels Verstemmen) genannt.

Alternativ können solche geometrischen Strukturen bereits bei der formgebenden Bearbeitung der Drehzapfen und /oder der Innenringe erzeugt wurden, d.h. i.d.R. noch vor der Montage der Innenringe auf den Drehzapfen. Insbesondere können solche Strukturen angeschmiedet sein oder mittels Schleifbearbeitung hergestellt werden.

Weitere Merkmale und Vorteile ergeben sich aus den Unteransprüchen und den nicht einschränkend zu verstehenden Ausführungsbeispielen, die im Folgenden anhand der Zeichnung näher erläutert werden. In dieser zeigen:

Fig. 1: eine perspektivische Explosionsansicht eines Vorbekannten gattungsgemäßen Gleichlaufdrehgelenks,
Fig. 2: eine perspektivische Ansicht des äußeren Gelenkelements dieses Gleichlaufdrehgelenks (einer "Tulpe"),
Fig. 3: eine Längsschnittansicht der gelenkigen Verstellung dieses Gleichlaufdrehgelenks und des Schwenkvorgangs des Gelenkinnenteils innerhalb der Rolle
Fig. 4: eine perspektivische Ansicht des Gelenkinnenteils dieses Gleichlaufdrehgelenks (eines "Tripodesterns"),
Fig. 5: eine Aufsicht in Axialrichtung auf den Tripodestern aus Fig. 4
Fig. 6: eine Aufsicht in Axialrichtung auf das Gelenkinnenteil eines erfindungsgemäßen Gleichlaufdrehgelenks mit einer montierten Rolle,
Fig. 7: einen senkrecht zur Axialrichtung ausgeführten Schnitt durch das Gelenkinnenteil und das montierte Rolle aus Fig. 6,
Fig. 8: einen senkrecht zur Radialrichtung ausgeführten Schnitt längs der Linie A-A in Fig. 6 durch das Gelenkinnenteil und das montierte Rolle,
Fig. 9: einen Schnitt durch eine erfindungsgemäße Rolle,
Fig. 10: eine Detailansicht des Schnitts aus Fig. 9,
Fig. 11: einen ersten Ausschnitt aus Fig. 7, in dem sich der Außenring der Rolle in seiner äußeren radialen Extremlage befindet,
Fig. 12: einen zweiten Ausschnitt aus Fig. 7, in dem sich der Außenring der Rolle in seiner inneren radialen Extremlage befindet,
Fig. 13: eine schematische Darstellung der praktischen Schwierigkeiten, die bei der Zusammenfügung von Gelenkinnenteil und -außenteil auftreten können,
Fig. 14: eine schematische Darstellung einer ersten erfindungsgemäßen Gleichlaufdrehgelenks mit einer verschiebebegrenzten Rolle,
Fig. 15: eine schematische Darstellung einer zweiten erfindungsgemäßen Gleichlaufdrehgelenks mit einer verschiebebegrenzten Rolle,

Fig. 16: eine schematische Darstellung einer ersten bevorzugten Weiterbildung eines erfindungsgemäßen Gleichlaufdrehgelenks mit einer kipplimitierten Rolle, und

Fig. 17: eine schematische Darstellung einer zweiten bevorzugten Weiterbildung eines erfindungsgemäßen Gleichlaufdrehgelenks mit einer kipplim itierten Rolle.

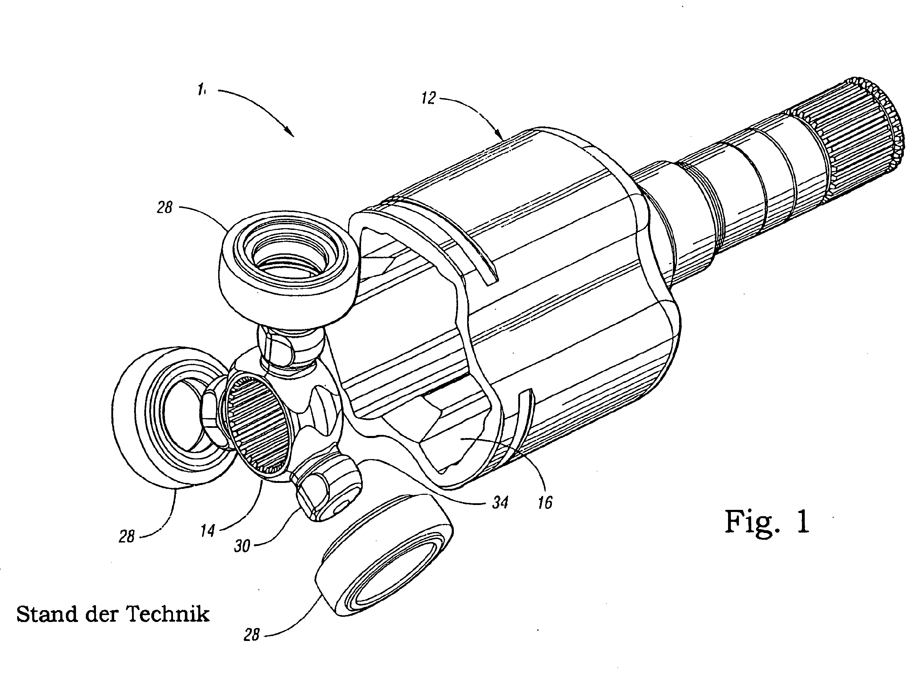

Verschiedene Ausführungsformen eines erfindungsgemäßen Gleichlaufdrehgelenks werden in Verbindung mit Fig. 1 bis 17 erläutert. Dabei zeigen die Figuren 1 bis 3 das aus der DE 102 06 733 A1 bekannte Gleichlaufdrehgelenk, dessen Aufbau im Wesentlichen - bis auf die Rollen des Gelenks - mit demjenigen des aus der DE 103 25 11 6 A1 bekannten Gleichlaufdrehgelenks sowie des erfindungsgemäßen Gleichlaufdrehgelenks identisch ist.

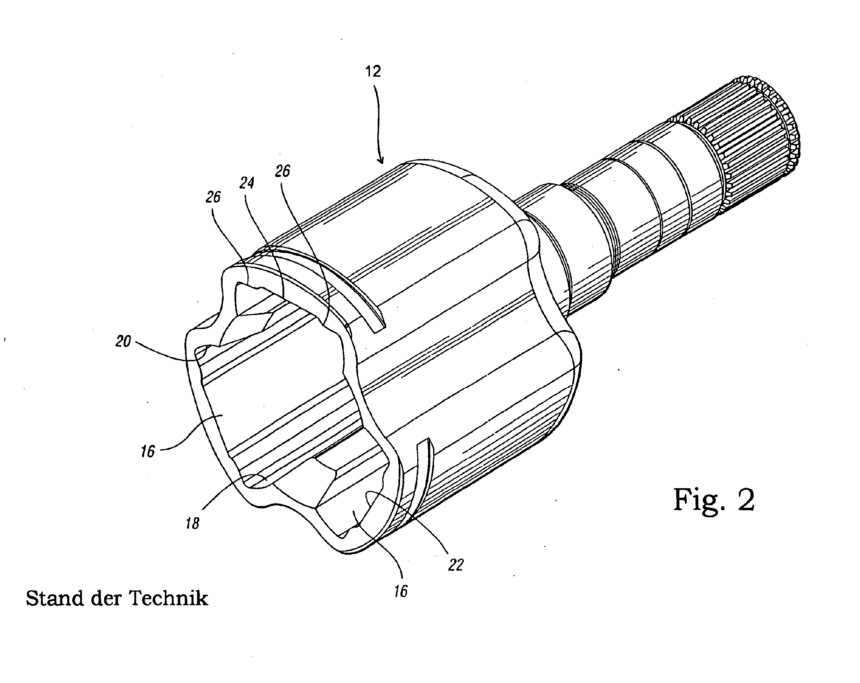

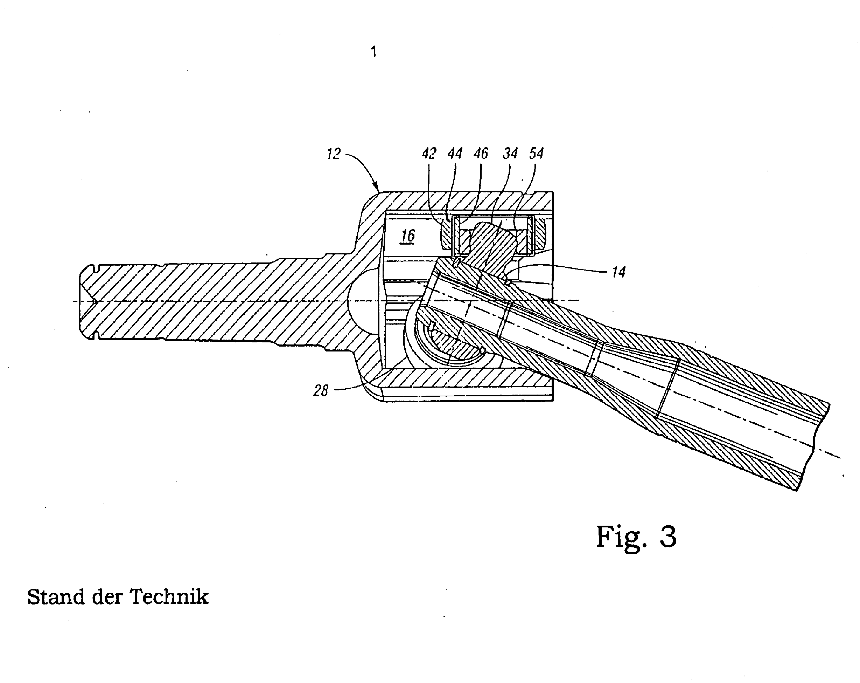

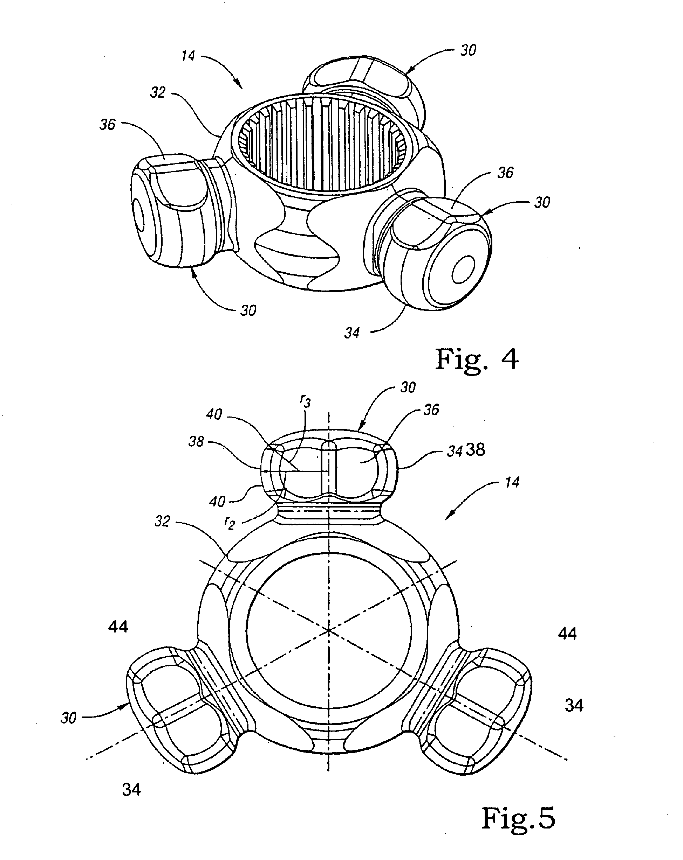

Fig. 1 zeigt eine perspektivische Explosionsansicht eines Gleichlaufdrehgelenks 10 mit einem Gelenkaußenteil 12 und einem als Tripodestern ausgebildeten Gelenkinnenteil 14. Das Gelenkaußenteil ist in Fig. 2 getrennt gezeigt, während der Tripodestern 14 in Fig. 4 getrennt gezeigt ist. Ein Satz von drei länglichen und sich axial erstreckenden Bahnen oder Laufflächen 16 sind umfangsmäßig innerhalb des Hohlraums des Gelenkaußenteils12 gebildet. In Fig. 3 ist eine Teilschnittansicht des Gelenkaußenteils 12 gezeigt, die sich in Längsrichtung entlang des Teils erstreckt. Wie am besten aus Fig. 2 hervorgeht, umfasst jede Bahn 16 gegenüberliegende Innenflächen bzw. -seiten 18 und 20 und eine äußere Endseite bzw. Stirnseite 22. I n diesem Ausführungsbeispiel sind die Innenseiten 18 und 20 so gebildet, dass sie eine kugelförmige oder konkave Kontur aufweisen. Die Stirnseite 22 ist so gebildet, dass sie einen hoch stehenden mittleren Abschnitt 24 aufweist. Dadurch, dass der mittlere Abschnitt 24 der Stirnseite 22 hoch steht, wird Vorteilhafterweise eine Schulterfläche 26 erzeugt, die die Oberseite einer Rolle 28 trägt und eine Verschiebung der Rolle 28 innerhalb der Bahn 16 begrenzt. Außerdem stellt der hoch stehende mittlere Abschnitt 22 einen Schmiermittelkanal für eine optimale Verteilung von Schmierfett zu den Bahnen 16 bereit und trägt Oberflächen, um die Wälzkontaktreibung zu verringern, wodurch die Gelenktauchkolbenwirkung herabgesetzt wird.

Wie in Fig. 4 und 5 gezeigt, umfasst der Tripodestern 14 drei Achszapfen 30, die umfangsmäßig um einen Spinnenkörper 32 angeordnet sind. In der gezeigten Ausführungsform bildet jeder Achszapfen 30 an seinem freien Ende einen Drehzapfen 34 mit einer teilweise kugelförmigen Rollentragfläche 44 aus. Wie nachfolgend erläutert, sind die Drehzapfen 34 so angeordnet bzw. dazu ausgelegt, in einen einteiligen Innenring 48 einer Rolle 28 zu passen. Ein Satz von abgeschnittenen oder abgeflachten Oberflächenabschnitten 36 sind in gegenüberliegenden Bereichen des äußeren Drehzapfendurchmessers derart gebildet, dass ein Schmiermittelkanal zur besseren Schmierung bereitgestellt wird. Darüber hinaus sind die abgeflachten Oberflächenabschnitte 36 so ausgebildet, dass eine Montage des einteiligen Innenrings 48 auf dem Drehzapfen 34 möglich ist. Hierzu muss der Innenring 48 nur geeignet gegen den Drehzapfen 34 verkippt werden, wie im Folgenden noch genauer beschrieben wird.

Wie sich am Besten aus Fig. 5 ergibt, ist die äußere Form des Drehzapfens 34 durch einen sphärischen, zentralen Bereich 38 mit einem Radius r2 gebildet. Obere und untere gekrümmte Bereiche 40 erstrecken sich hinauf zur Oberseite und hinunter zum Hals des Achszapfens 30 mit einem kleineren Radius r3. Wie in Fig. 3 gezeigt, erlaubt die Formgebung der Drehzapfen 34 eine Kippbewegung des Tripodesterns 14 relativ zu einem Innenring der Rolle 28, wenn das Gleichlaufdrehgelenk 1 gelenkig verlagert wird. Hierbei verbleibt die Rolle 28 in einer geeigneten parallelen Ausrichtung relativ zu den Seitenwänden 18, 20 der Bahnen 16.

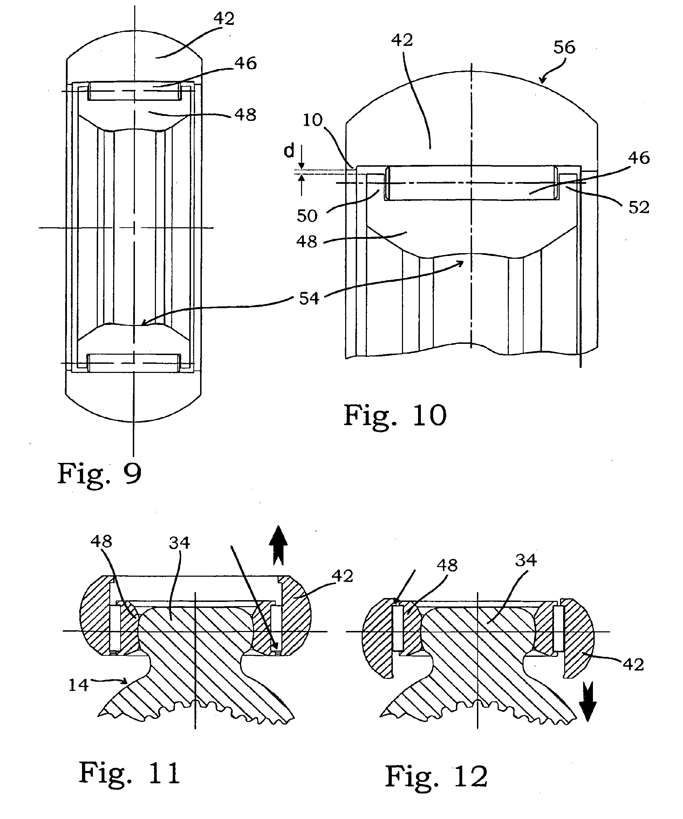

Fig. 9 und 10 zeigen einer Rolle 28 eines erfindungsgemäßen Gleichlaufdrehgelenks 1 im Schnitt. Die Rolle umfasst einen Außenring 42 und einen Innenring 48, zwischen denen ein Satz von Wälzkörpern 46, wie etwa Rollen eines Nadellagers, angeordnet ist. Dabei bildet der Innenring 48 zwei sich in Radialrichtung erstreckende untere und obere Flansche 50 und 52 aus, die eine Axialführung für die Wälzkörper 46 ausbilden. Diese Axialführung legt die Lage der Wälzkörper 46 relativ zum Innenring 48 in Axialrichtung fest, wobei der Innenring 48 die Wälzkörper 46 auf seiner Außenseite trägt bzw. stützt.

Wie in Fig. 9 und 10 gezeigt, ist die Dicke des Außenrings 42 so gewählt, dass sie die Dicke des Innenrings 48 sowie die Länge der Wälzkörper 46 übertrifft. Der Außenring 42 ist ein seiner Dicke deutlich größer bemessen als der Innenring 48, um einen ausreichenden axialen Verschiebeweg der Lagerringe gegeneinander zu erzielen, wobei der Innenring 48 auf den Wälzkörpern 46 über seine gesamte Breite, unabhängig von der festliegenden Position des Außenrings 42, innerhalb der Bahn getragen ist. Erfindungsgemäß ist der Innenring 48 beweglich, damit der Innenring 48 in geeigneter Weise, relativ zu dem Drehzapfen 34, positioniert bleibt, wenn der Drehzapfen 34 darin verschwenkt.

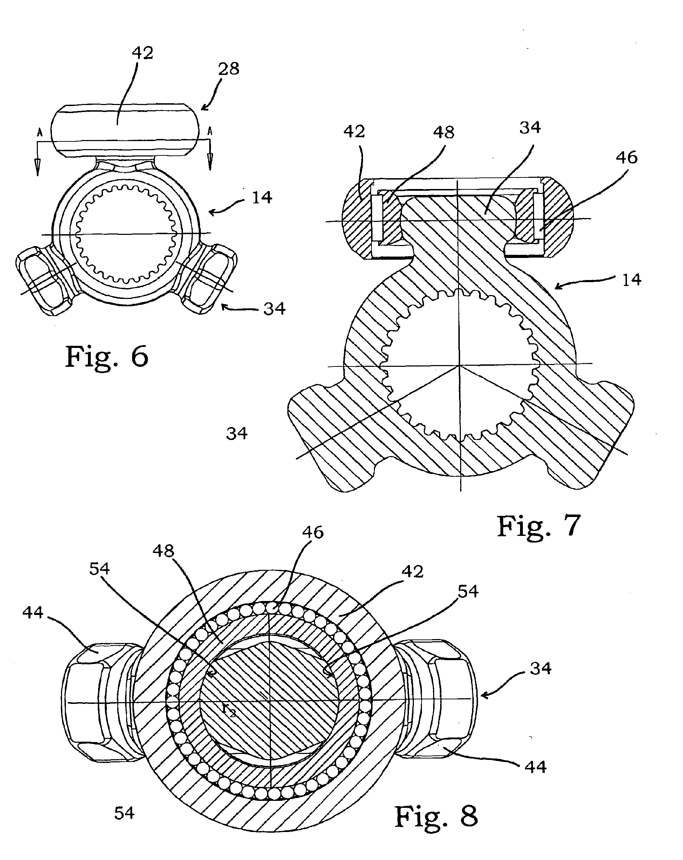

Zur Beschreibung der Montage einer Rolle 28 auf einen Drehzapfen 34 wird nun wiederum auf die Figuren 7 und 8 Bezug genommen. Ein Rolle 28 wird auf einer Rollentragfläche 44 eines Drehzapfens 34 des Tripodesterns 14 angebracht durch zur Flucht bringen von einer Seite eines Innenrings 48 mit der Außenseite der Rollentragfläche 44 unter einem bestimmten Winkel und daraufhin durch Bewegen der gegenüberliegenden Seite des Innenrings 48 über die Rollentragfläche 44, bis der Abschnitt mit kleinstem Durchmesser des Innenrings 48 über den Abschnitt mit größtem Durchmesser der Rollentragfläche 44 gleitet. Mit anderen Worten, wenn der Innenring 48 unter einem bestimmten Winkel positioniert ist, gibt die gegenüberliegende Seite den Außenradius des Drehzapfens 34 frei und erlaubt es, dass der gesamte Innenring 48 über den Drehzapfen 34 geschoben wird bzw. gleitet. Nachdem der Innenring 48 über den Abschnitt größten Durchmessers des Drehzapfens 34 geschoben wurde, wird das Rolle 28 neu derart ausgerichtet, dass der Innenring 48 nicht mehr mit dem speziellen Winkel abgewinkelt ist, wobei die Krümmung des Innenrings 48 dazu führt, dass das Rolle 48 auf dem Drehzapfen 34 gehalten wird.

Fig. 6 zeigt den Tripodestern 14 des erfindungsgemäßen Gleichlaufdrehgelenks 1 in Aufsicht mit einem auf einem Drehzapfen 34 montierten Rolle 28. Dieser Tripodestern 14 mit aufgesetzter Rolle 28 ist nochmals in Fig. 7 im Schnitt gezeigt. Aus dieser Schnittansicht ist deutlich zu ersehen, wie die Rolleninnenfläche 54 der Rolle 28 die Rollentragfläche 44 des Drehzapfens umgreift, wobei eine begrenzte Kippbewegung der Rolle 28 gegen die Symmetrieachse des Drehzapfens 34 möglich ist. Fig. 8 zeigt nochmals einen Schnitt durch den Achszapfen 34 mit aufgesetzter Rolle 28 aus Fig. 6, wobei der Schnitt längs einer durch die Schnittlinie A-A verlaufenden und senkrecht auf der Papierebene stehenden Schnittebene ausgeführt wurde. Zu erkennen ist nochmals der Radius r2 der sphärischen zentralen Bereiche 36 der Kugelzapfen 34, die die Rollentragflächen 44 ausbilden. Ebenfalls ersichtlich ist der durch die abgeflachten Oberflächenabschnitte 36 ausgebildete Schmiermittelkanal zwischen Drehzapfen 34 und Rolle 28.

Fig. 7 zeigt die montierte Rolle in seiner mittleren Arbeitsposition, d.h. der Innenring 48 und der Außenring 42 liegen im Wesentlichen zentriert übereinander. Erfindungsgemäß wird die montierte Rolle nun auch bei maximaler Relativverschiebung von Innenring 48 und Außenring 42 gegen ein Auseinanderfallen gesichert. Hierzu bildet der Außenring 42 an seiner dem unteren Flansch 50 des Innenrings 48 gegenüberliegenden Seite einen Anschlag 10 aus, wie aus Fig. 10 ersichtlich ist. Dieser bildet eine Anlage für die Wälzkörper 46 der Rolle 26 aus, an dem diese in einer ersten, aus Fig. 11 ersichtlichen Extremposition der Rolle 26 zur Anlage kommen und damit eine weitere axiale Relativverschiebung der Lagerringe 42, 48 der Rolle 26 verhindern. Der sich ergebende mechanische Kontaktpunkt ist durch den Pfeil in Fig. 11 bezeichnet. Der Anschlag 10 sichert die Rolle 28 sowohl während der Endmontage des erfindungsgemäßen Gleichlaufdrehgelenks 1 als auch in dessen Betrieb in einer axialen Verschieberichtung gegen ein Auseinanderfallen.

Im montieren Zustand des erfindungsgemäßen Gleichlaufdrehgelenks 1 wird dieses sowie das Rolle 28 auch in der anderen axialen Verschieberichtung der Lagerringe 42, 48 gegen ein Auseinanderfallen gesichert. Dies erfolgt durch eine mechanische Abstützung des Außenrings 42 am Tripodestern 14, wie sie aus Fig. 12 ersichtlich und mit dem Pfeil gekennzeichnet ist. Die Ausbildung einer solchen mechanischen Abstützung kann durch Wahl geeigneter Abmessungen von Außenring 42 und Tripodestern 14 erreicht werden.

Der Außendurchmesser des Innenrings 48 einschließlich der etwa gleichlangen Flansche 50, 52 ist kleiner bemessen als der Innendurchmesser des Außenrings 42 einschließlich des Anschlags 10, wie aus Fig. 10 ersichtlich ist. Zwischen dem unteren Flansch 50 und dem Anschlag 10 verbleibt ein Spalt mit der Spaltweite d. Die Spaltweite d ist so bemessen, dass der Innenring 48 ohne eingesetzte Wälzkörper 46 frei durch den Außenring 42 der Rolle 28 hindurchgeführt werden kann. Eine direkte mechanische Abstützung der Lageringe 42, 48 aneinander, die aufgrund der relativen Drehbewegung der Lageringe 42, 48 zu hohem Verschleiß führen würde, wird damit vermieden. Der obere Flansch 50 und der untere Flansch 52 dienen daher im gezeigten Ausführungsbeispiel ausschließlich zur Führung der Wälzkörper 46. Die Abstützung erfolgt vielmehr mittelbar über die schnell drehenden Wälzkörper 46, wodurch die Reibung und damit der Verschleiß deutlich vermindert werden können.

Zur Montage der Rolle 28 gemäß des vorstehenden Ausführungsbeispiels hat es sich als vorteilhaft erwiesen, wenn die Wälzkörperlaufbahn des Innenrings 48 mit Fett ausgefüllt wird, in das nachfolgend die Wälzkörper 46 hineingedrückt werden. Aufgrund der Fettfüllung bleiben die Wälzkörper 46 am Innenring 48 haften, so dass ein einfaches Zusammenfügen der Rolle 28 möglich ist.

Wie am besten aus den Fig. 8 und 9 hervorgeht, verwendet jeder Rolle 28 eine konkave, d. h. kugelförmige Wälzelementinnenfläche 54 auf dem Innenring 48 zur Erleichterung des Umgreifens mit der äußeren, kugelförmigen Kontur des Drehzapfens 34, d.h. der Rollentragfläche 44. Die konkave Innenfläche des Innenrings 48 dient dazu, die Kontaktpunkte zwischen dem Drehzapfen 34 und dem Innenring 48 gleichmäßig zu verteilen, wenn der Drehzapfen 34 in dem Rolle 28 verschwenkt. Insbesondere dient die Kugel-/ Kugelkontaktoberfläche des Drehzapfens 34 mit der Oberfläche des Innenrings 48 dazu, Hertz'sche Spannungen zu verringern durch Verteilen der Kraft über eine Kugel-/ Zylinderkontaktoberflächenanordnung. Dies wiederum verringert in vorteilhafter Weise die Reibung und potentielles Schütteln des Gelenks während des Betriebs des Fahrzeugs.

Die Wälzelementaußenfläche 56 des Außenrings 42 besitzt die Form einer abgeschnittenen Kugel mit im Wesentlichen demselben Durchmesser wie die zylinderförmigen Seitenwände 18, 20 der Bahnen 16 des Gelenkaußenteils 12, um einen einzigen, kontinuierlichen Kontaktbereich zwischen den zwei Oberflächen zu erzeugen. Die Kugel-/ Kugelkontaktoberfläche des Außenrings 42 mit den gegenüberliegenden Seitenwände 18, 20 der Bahnen 16 verteilt die Kraft gleichmäßiger unter Verringerung von Kontaktspannungen, die während des Betriebs des Gelenks auftreten.

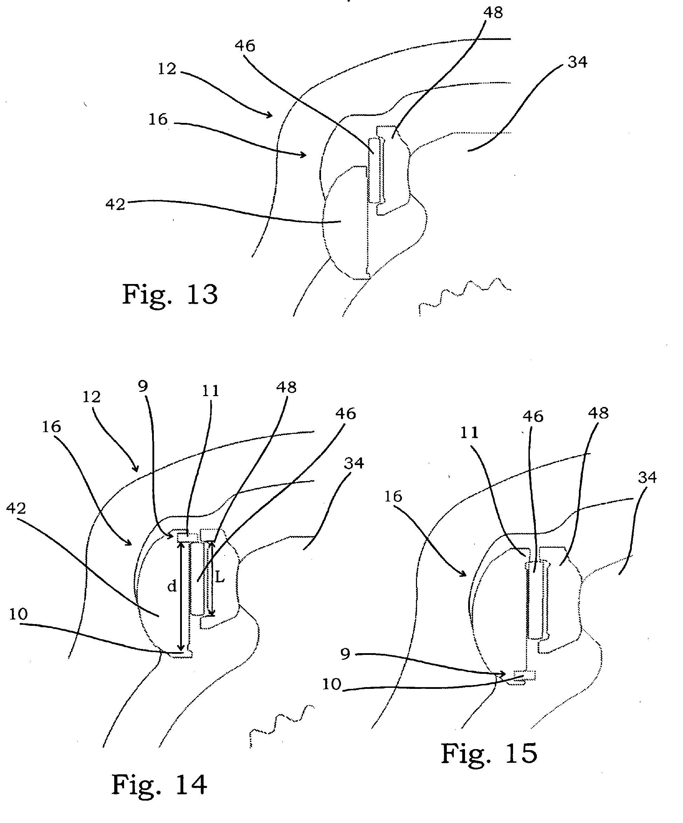

Figur 13 illustriert beispielhaft die Problematik, die sich bei einem Zusammenbau des Gelenkaußenteil 12 und des Gelenkinnenteils 14 eines erfindungsgemäßen Gleichlaufdrehgelenks ergibt, sofern diese beispielsweise in einer Kfz-Montagestraße stattfindet. Bei der Montage wird in der Regel die mit Splines versehene Halbwelle, mit welcher das Außengelenk 12 verbunden ist, im Getriebe des Kraftfahrzeugs befestigt. Nachfolgend wird manuell das Innengelenk 14 des erfindungsgemäßen Gleichlaufdrehgelenks, d.h. der Tripodestern 32 mit auf den Zapfen 34 aufgesetzten Rollen in das Außengelenk 12 eingeführt. Hierbei ergibt sich jedoch im Allgemeinen die Problematik, dass der Außenring 42 der Rolle unter der Einwirkung der Gravitationskraft gegen den Innenring 48 verschoben wird, wie in Figur 13 dargestellt ist. Da gleichzeitig die Lage dreier Rollen 28 dergestalt kontrolliert werden muss, dass sie in die Laufbahnen 16 des Außengelenks 12 eingeführt werden können, ist dies für einen Monteur eine praktisch kaum zu bewältigende Aufgabe.

Figur 14 zeigt nun eine bevorzugte Ausgestaltung des erfindungsgemäßen Drehgelenks 1, bei welchem die Montage deutlich vereinfacht ist. Im Gegensatz zu der in Figur 13 illustrierten Situation, bei welchem der Außenring 42 der Rolle 28 nur einen Verschiebeanschlag 10 aufweist, der zum Zentrum des Tripodesterns 32 hin orientiert ist, weist hier der Außenring 42 an seinem radial außenliegenden Ende auf seiner Innenlauffläche eine Ringnut 9 auf, in die ein Federring 11 eingesetzt ist. Dieser Federring 11 wird eingesetzt, nachdem die Rolle 28 bestehend aus Innenring 48, Außenring 42 und den Wälzkörpern 46 zusam mengesetzt wurde, in die Ringnut 9 eingeführt und sichert die Rolle 28 gegen Zerfallen. Darüber hinaus wird aus Figur 14 deutlich, dass der zweite Verschiebeanschlag 11 die axiale Verschiebung des Außenrings 42 gegen den Innenring 48 unter dem Einfluss der Gewichtskraft deutlich beschränkt, so dass nur noch geringfügige Lagekorrekturen des Außenrings 42 erforderlich sind, damit die Rolle 28 in die Laufbahn 16 des Außengelenks eingeführt werden kann. Figur 14 kann weiterhin deutlich entnommen werden, dass der Abstand d zwischen den Verschiebeanschlägen 11 und 12 deutlich größer ist als die Länge L der Rollenelemente 46, bevorzugt ist der Abstand d um 25 bis 100 % größer als die Länge L, im vorliegenden Fall etwa um 50%.

Der zweite Verschiebeanschlag 11 kann anstelle des vorstehend erwähnten Federrings, welcher in einer Ringnut 9 eingeführt ist, auch als einfache Scheibe ausgestaltet sein, welche sich an einer innenliegenden Schulter abstützt. Außenliegend ist die Scheibe durch Umbördeln oder Verstemmen des Außenrings 42 an diesem mechanisch festgelegt.

Figur 15 zeigt eine alternative Ausgestaltung eines erfindungsgemäßen Gleichlaufdrehgelenks, welche sich von der Ausgestaltung von Figur 14 nur in der relativen Anordnung des ersten und des zweiten Verschiebeanschlags 10, 11 unterscheidet. Figur 15 ist zu entnehmen, dass der außenliegende Verschiebeanschlag 11 nunmehr als ringförmiger Absatz ausgebildet ist, welcher einstückig mit dem Lageraußenring 42 ausgestaltet ist. Hingegen ist der innenliegende Verschiebeanschlag 10 im Ausführungsbeispiel gemäß Figur 14 als Federring ausgebildet, welcher nach einer Montage der Rolle 28 in die Nut 9 eingeführt wurde und som it die Rolle 28 gegen ein Zerfallen sichert.

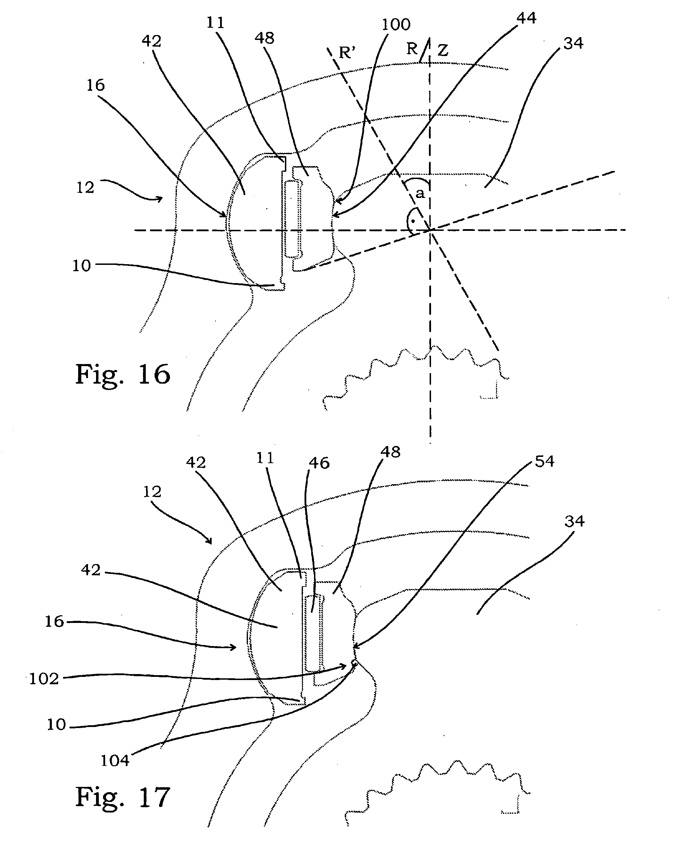

Figur 16 zeigt nun eine bevorzugte Weiterbildung des Gleichlaufdrehgelenks gemäß der Figuren 14 bzw. 15, bei welchem neben der Limitierung der axialen Verschiebbarkeit des Außenrings 42 der Rolle 28 gegen den Innenring 48 durch zwei Verschiebeanschläge 10 und 11, welche hier einstückig mit dem Außenring 42 ausgebildet sind, ein Mittel aufweist, welches den Innenring 48 der Rolle 28 in einer definierten Winkellage relativ zur Zapfenachse Z des Zapfens 34 lösbar festlegt. Diese Festlegung dient in erster Linie dazu, bei einer Montage des Innengelenks 14 des erfindungsgemäßen Gleichlaufdrehgelenks 1 im Außengelenk 12 ein Verkippen der Rollen 28 auf den Zapfen 34 des Tripodesterns 32 zu verhindern. Hierzu sind in der in Figur 16 dargestellten Ausgestaltung des Gleichlaufdrehgelenks am außenliegenden Ende der Rollentragflächen 44 auf jeder Rollentragfläche 44 nach dem Aufsetzen der Rolle 28 auf den Zapfen 34 punktförmige plastische Verformungen erzeugt worden, beispielsweise mittels mechanischen Körnens, d.h. lokaler plastischer Deformation der Rollentragfläche 44. Diese punktförmigen Deformationen 100 stellen eine mechanische Barriere für den Innenring 48 der Rolle 28 gegen ein Verkippen aus der Ruhelage dar. Im Ausführungsbeispiel gemäß Figur 16 fällt in der Ruhelage die Drehachse R der Rolle 28 gerade mit der Zapfenachse Z zusammen. Verhindert wird durch die punktförmige plastische Deformation 100 ein Verkippen der Rolle 28 in der in Figur 16 schematisch durch die verkippte Drehachse R angedeutete Weise. Dem die Winkellage der Rolle 28 auf dem Zapfen 34 des Tripodesterns 32 durch die punktförmigen Verformungen 100 festgelegt wird, ist eine besonders einfache Montage des Gelenkinnenteils 14 im Gelenkaußenteil 12 möglich. Hierzu wird die Ruhelage der Rolle 28 auf dem Zapfen 34 vorteilhaft so eingestellt, dass die Orientierung der Rolle 28 auf dem Zapfen 34 im Wesentlichen der Ausrichtung der in Umfangsrichtung ausgerichteten Laufbahnen 14 im Gelenkaußenteil entspricht. Nachdem das Gelenkinnenteil 14 des erfindungsgemäßen Gleichlaufdrehgelenks 1 in das Außengelenk 12 eingeführt wurde, kann durch ein Abwinkeln der Drehachse des Gelenkinnenteils gegen die Drehachse des Gelenkaußenteils 12 die mechanische Barriere gegen das Verkippen der Rollen 28 auf den Zapfen 34 überwunden werden, indem eine erneute plastische Deformation der Rollentragfläche 44 im Bereich der bodenförmigen Verformung 100 hervorgerufen wird. Hiernach ist eine praktisch kraftfreie Abwinklung der Rollen 28 auf den Zapfen 34 möglich.

Figur 17 schließlich zeigt eine weitere vorteilhafte Ausgestaltung eines erfindungsgemäßen Gleichlaufdrehgelenks mit einer Verkippsicherung der erfindungsgemäßen Art für die auf den Zapfen 34 des Tripodesterns 32 montierten Rollen 28. Anstelle einer punktförmigen mechanischen Deformation 100 der Rollentragfläche 44 der Zapfen 34 ist im Ausführungsbeispiel gemäß Figur 17 eine Ringnut am innenliegenden Ende der kugeligen Rolleninnenfläche 54 auf. In diese Ringnut 102 ist ein Federring 104 eingesetzt, welcher mit einer in Figur 17 nicht näher dargestellten Kante in der Oberfläche des Zapfens 34 zusammenwirkt. Wenn der Federring 104 an dieser Kante zur Anlage kommt, definiert er damit die Ruhelage des auf den Zapfen 34 aufgesetzten Innenrings 48. Um die Drehachse R der Rolle 28 aus dieser Ruhelage zu verkippen, ist eine elastische Deformation des in die Ringnut 102 eingesetzten Federrings 104 erforderlich, so dass ein definiertes Kippmoment auf die Drehachse R der Rolle 28 aufgebracht werden muss, um diese aus ihrer in Figur 17 angedeuteten Ruhelage zu verkippen. Grundsätzlich ist es möglich, den Federring 104 nach der Endmontage des Gelenkinnenteils 14 im Gelenkaußenteil 12 an Ort und Stelle zu belassen, sofern hier keine zu hohen Kippmomente zu überwinden sind. Der auftretende Verschleiß kann aber minimiert werden, in dem nach der Zusammenfügung des erfindungsgemäßen Gleichlaufdrehgelenks 1 an der Montagelinie des Kraftfahrzeugs der Federring 104 aus der Ringnut 102 entfernt wird.

Nicht dargestellt in den Figuren ist eine weitere mögliche Verbesserung des aus der DE 103 25 116 A1 bekannten Gleichlaufdrehgelenks. Es ist nämlich möglich, am offenen Ende des Gelenkaußenteils 12 Schrägen an den Bahnen 16 vorzusehen, die das Einfädeln der Rollen 28 des Gelenkinnenteils 14 bei der Montage weiter vereinfachen, indem sie auch bei einer gewissen Axialverschiebung der Außenringe 42 gegen die Innenringe die Außenringe noch auffangen und in die Bahnen 16 leiten.

Vorstehend wurden verschiedene beispielhafte Ausführungsformen der Erfindung erläutert. Die Erfindung ist jedoch nicht hierauf beschränkt, sondern zahlreichen Abwandlungen und Modifikationen zugänglich, insbesondere gemäß der äquivalenten Ausgestaltung gemäß Anspruch 7.

**Bezugszeichen**

| | | | |
|---|---|---|---|
| 1 | Gleichlaufdrehgelenk | 32 | Spinnenkörper |
| 9 | Ringnut | 34 | Drehzapfen |
| 10 | innenliegender Verschiebeanschlag | 36 | Oberflächenabschnitt |
| | | 38 | sphärischer zentraler Bereich |
| 11 | außenliegender Verschiebeanschlag | 40 | oberer/unterer gekrümmter Bereich |
| 12 | Gelenkaußenteil | 42 | Außenring |
| 14 | Gelenkinnenteil | 44 | Rollentragfläche |
| 16 | Bahn | 46 | Wälzkörper |
| 18 | Seitenwand | 48 | Innenring |
| 20 | Seitenwand | 50 | unterer Flansch |
| 22 | Stirnseite | 52 | oberer Flansch |
| 24 | mittlerer Abschnitt | 54 | Rolleninnenfläche |
| 26 | Schulterfläche | 56 | Rollenaußenfläche |
| 28 | Rolle | 100 | punktförmige Verformung |
| 28 | Rolle | 102 | Ringnut |
| 30 | Achszapfen | 104 | Federring |

**Patentansprüche**

1. Gleichlaufdrehgelenk (1) mit

a) einem Gelenkaußenteil (12) mit drei über den Umfang verteilten und sich in Axialrichtung erstreckenden Bahnen (16),

b) einem Gelenkinnenteil (14) mit drei über den Umfang verteilten und sich in Radialrichtung erstreckenden Drehzapfen (34), die dazu vorgesehen sind, mit den Bahnen (16) in Eingriff zu gelangen, und die Rollentragflächen (44) ausbilden,

c) und zwischen Gelenkaußenteil (12) und Gelenkinnenteil (14) angeordneten Rollen (28), wobei die Rollen (28) jeweils

i) einen Innenring (48) mit einer Rolleninnenfläche (54) aufweisen, deren Formgebung so an die Rollentragflächen (44) der Drehzapfen (34) angepasst ist, dass ein in den Innenring (48) eingeführter Drehzapfen (34) des Gelenkinnenteils (14) in diesem eine Kippbewegung, aber keine lineare Verschiebebewegung ausführen kann,

ii) und einen Außenring (42) mit einer Rollenaußenfläche (56) aufweisen, deren Formgebung so an die Bahnen (16) des Gelenkaußenteils (12) angepasst ist, dass ein in eine Bahn (16) eingeführter Außenring (42) in dieser eine Abrollbewegung ausführen kann,

iii) zwischen dem Innenring (48) und dem Außenring (42) eine Vielzahl von Wälzkörpern (46) angeordnet ist, so dass der Außenring (42) auf dem Innenring (48) abwälzen kann,

iv) der Innenring (48) eine Axialführung ausbildet, der die Lage der Wälzkörper (46) relativ zum Innenring (48) in Axialrichtung festlegt,

v) der Innenring (48) und der Außenring (42) in Axialrichtung gegeneinander verschieblich sind, **dadurch gekennzeichnet, dass**

vi) der Außenring (42) einen innenliegenden Verschiebeanschlag (10) und einen außenliegenden Verschiebeanschlag (11) ausbildet, die sich in Radialrichtung nach Innen erstrecken und die die Abrollbewegung der Wälzkörper (46) auf der Innenfläche des Außenrings (42) in Axialrichtung begrenzen und

vii) ein Verschiebeanschlag (10, 11) die Außenkontur des Innenrings (48) nicht übergreift.

**2.** Gleichlaufdrehgelenk (1) gemäß Anspruch 1, **dadurch gekennzeichnet, dass** zumindest einer des innenliegenden Verschiebeanschlags (10) und des außenliegenden Verschiebeanschlags (11) einstückig mit dem Außenring (42) ausgeformt ist.

**3.** Gleichlaufdrehgelenk (1) gemäß Anspruch 2, **dadurch gekennzeichnet, dass** der einstückig mit dem Außenring (42) ausgeformte Verschiebeanschlag (10) als ringförmige Anlageschulter ausgeformt ist.

**4.** Gleichlaufdrehgelenk (1) gemäß Anspruch 3, **dadurch gekennzeichnet, dass** die ringförmige Anlageschulter vor der Fertigbearbeitung des Außenrings (42) ausgeformt wurde.

**5.** Gleichlaufdrehgelenk (1) gemäß Anspruch 3, **dadurch gekennzeichnet, dass** die ringförmige Anlageschulter nach der Fertigbearbeitung des Außenrings (42) ausgeformt wurde.

**6.** Gleichlaufgelenk gemäß Anspruch 1, **dadurch gekennzeichnet, dass** der Innenring (48) einen Innenliegenden Verschiebeanschlag (10) und einen außenliegenden Verschiebeanschlag (11) ausbildet, die sich in Radialrichtung nach Außen erstrecken und die die Abrollbewegung der Wälzkörper (46) auf der Außenfläche des Innenrings (48) in Axialrichtung begrenzen.

**7.** Gleichlaufdrehgelenk (1) gemäß Anspruch 6, **dadurch gekennzeichnet, dass** zumindest einer des innenliegenden Verschiebeanschlags (10) und des Außenliegenden Verschiebeanschlags (11) einstückig mit dem Innenring (48) ausgeformt ist.

**8.** Gleichlaufdrehgelenk (1) gemäß Anspruch 7, **dadurch gekennzeichnet, dass** der einstückig mit dem Innenring (48) ausgeformte Verschiebeanschlag (10) als ringförmige Anlageschulter ausgeformt ist.

**9.** Gleichlaufdrehgelenk (1) gemäß Anspruch 8, **dadurch gekennzeichnet, dass** die ringförmige Anlageschulter vor der Fertigbearbeitung des Innenrings (48) ausgeformt wurde.

**10.** Gleichlaufdrehgelenk (1) gemäß Anspruch 8, **dadurch gekennzeichnet, dass** die ringförmige Anlageschulter nach der Fertigbearbeitung des Innenrings (48) ausgeformt wurde.

**11.** Gleichlaufdrehgelenk (1) gemäß Anspruch 6, **dadurch gekennzeichnet, dass** zumindest ein Verschiebeanschlag (10, 11) die Innenkontur des Außenrings (42) nicht übergreift.

**12.** Gleichlaufdrehgelenk (1) gemäß Anspruch 1 oder 6, **dadurch gekennzeichnet, dass** der Innenring (48) einteilig ausgebildet ist.

**13.** Gleichlaufdrehgelenk (1) gemäß Anspruch 1 oder 6, **dadurch gekennzeichnet, dass** der Abstand d der Verschiebeanschläge (10, 11) größer ist als die Länge L der Wälzkörper (46).

**14.** Gleichlaufdrehgelenk (1) gemäß Anspruch 1 oder 6, **dadurch gekennzeichnet, dass** zumindest einer des innenliegenden Verschiebeanschlags (10) und des außenliegenden Verschiebeanschlags (11) als separat ausgebildeter Sicherungsring ausgeformt ist.

**Claims**

**1.** Constant velocity pivot joint (1), comprising

a) an outer joint part (12) with three guideways (16) distributed over the circumference and extending in the axial direction,

b) an inner joint part (14) with three pivot pins (34), which are distributed over the circumference and extend in the radial direction, and which are provided to come into engagement with the guideways (16), and which form roller bearing surfaces (44),

c) and rollers (28) disposed between the outer joint part (12) and the inner joint part (14), each of the rollers (28)

i) comprising an inner ring (48) with an inner roller surface (54), the shape of which is adapted to the roller bearing surfaces (44) of the pivot pins (34) in such a way that a pivot pin (34) of the inner joint part (14) inserted into the inner ring (48) can execute a tilting movement therein, but not a linear displacing movement,

ii) and comprising an outer ring (42) with an outer roller surface (56), the shape of which is adapted to the guideways (16) of the outer joint part (12) in such a way that an outer ring (42) inserted into a guideway (16) can execute a roll-off movement therein,

iii) a plurality of rolling members (46) being disposed between the inner ring (48) and the outer ring (42) so that the outer ring (42) can roll off on the inner ring (48),

iv) the inner ring (48) forming an axial guide, which fixes the position of the rolling members (46) relative to the inner ring (48) in the axial direction,

v) the inner ring (48) and the outer ring (42) being axially displaceable relative to each other, **characterised in that**

vi) the outer ring (42) forms an inner displacement stop (10) and an outer displacement stop (11) which extend in the radial direction inwardly and which limit the roll-off movement of the rolling members (46) on the inner surface of the outer ring (42) in the axial direction, and

vii) a displacement stop (10, 11) does not reach over the outer contour of the inner ring (48).

2.  Constant velocity pivot joint (1) according to claim 1, **characterised in that** at least one of the inner displacement stop (10) and the outer displacement stop (11) is formed integrally with the outer ring (42).

3.  Constant velocity pivot joint (1) according to claim 2, **characterised in that** the displacement stop (10) formed integrally with the outer ring (42) is formed as an annular contact shoulder.

4.  Constant velocity pivot joint (1) according to claim 3, **characterised in that** the annular contact shoulder was formed prior to the completion of processing of the outer ring (42).

5.  Constant velocity pivot joint (1) according to claim 3, **characterised in that** the annular contact shoulder was formed subsequent to the completion of processing of the outer ring (42).

6.  Constant velocity pivot joint according to claim 1, **characterised in that** the inner ring (48) forms an inner displacement stop (10) and an outer displacement stop (11) which extend in the radial direction outwardly and which limit the roll-off movement of the rolling members (46) on the outer surface of the inner ring (48) in the axial direction.

7.  Constant velocity pivot joint (1) according to claim 6, **characterised in that** at least one of the inner displacement stop (10) and the outer displacement stop (11) is formed integrally with the inner ring (48).

8.  Constant velocity pivot joint (1) according to claim 7, **characterised in that** the displacement stop (10) formed integrally with the inner ring (48) is formed as an annular contact shoulder.

9.  Constant velocity pivot joint (1) according to claim 8, **characterised in that** the annular contact shoulder was formed prior to the completion of processing of the inner ring (48).

10. Constant velocity pivot joint (1) according to claim 8, **characterised in that** the annular contact shoulder was formed subsequent to the completion of processing of the inner ring (48).

11. Constant velocity pivot joint (1) according to claim 6, **characterised in that** at least one displacement stop (10, 11) does not reach over the inner contour of the outer ring (42).

12. Constant velocity pivot joint (1) according to claim 1 or 6, **characterised in that** the inner ring (48) is formed in a single piece.

13. Constant velocity pivot joint (1) according to claim 1 or 6, **characterised in that** the distance d of the displacement stops (10, 11) is greater than the length L of the rolling members (46).

**14.** Constant velocity pivot joint (1) according to claim 1 or 6, **characterised in that** at least one of the inner displacement stop (10) and the outer displacement stop (11) is formed as a separately formed circlip.

## Revendications

**1.** Joint rotatif homocinétique (1) comprenant

a) une partie extérieure de joint (12) ayant trois voies (16) réparties sur la circonférence et s'étendant dans la direction axiale,
b) une partie intérieure de joint (14) ayant trois tourillons (34) répartis sur la circonférence et s'étendant dans la direction radiale qui sont prévus pour venir en prise avec lesdites voies (16) et qui forment des surfaces de support de rouleau (44), et
c) des rouleaux (28) disposés entre ladite partie extérieure de joint (12) et ladite partie intérieure de joint (14), les rouleaux (28)

i) présentant chacun une bague intérieure (48) avec une surface intérieure de rouleau (54) dont la configuration est adaptée aux surfaces de support de rouleau (44) des tourillons (34) de telle manière qu'un tourillon (34) de la partie intérieure de joint (14), qui est introduit dans ladite bague intérieure (48) puisse exercer à l'intérieur de celle-ci un mouvement basculant, mais ne puisse pas exercer un mouvement de déplacement linéaire, et
ii) présentant chacun une bague extérieure (42) avec une surface extérieure de rouleau (56) dont la configuration est adaptée aux voies (16) de la partie extérieure de joint (12) de telle manière qu'une bague extérieure (42) introduite dans une voie (16) puisse exercer dans celle-ci un mouvement de roulement,
iii) une pluralité de corps de roulement (46) étant disposée entre ladite bague intérieure (48) et ladite bague extérieure (42) de sorte que la bague extérieure (42) puisse rouler sur la bague intérieure (48),
iv) ladite bague intérieure (48) formant un guidage axial, qui fixe la position des corps de roulement (46) par rapport à la bague intérieure (48) dans la direction axiale,
v) la bague intérieure (48) et la bague extérieure (42) étant
déplaçables l'une par rapport à l'autre dans la direction axiale, **caractérisé par le fait que**
vi) ladite bague extérieure (42) forme une butée interne de déplacement (10) et une butée externe de déplacement (11) qui s'étendent vers l'intérieur dans la direction radiale et qui limitent le mouvement de roulement des corps de roulement (46) sur la surface intérieure de ladite bague extérieure (42) dans la direction axiale, et
vii) une butée de déplacement (10, 11) ne s'étend pas sur le contour extérieur de ladite bague intérieure (48).

**2.** Joint rotatif homocinétique (1) selon la revendication 1, **caractérisé par le fait que** l'une au moins parmi lesdites butées interne de déplacement (10) et externe de déplacement (11) est réalisée d'un seul tenant avec ladite bague extérieure (42).

**3.** Joint rotatif homocinétique (1) selon la revendication 2, **caractérisé par le fait que** la butée de déplacement (10) réalisée d'un seul tenant avec la bague extérieure (42) est formée comme épaulement annulaire d'appui.

**4.** Joint rotatif homocinétique (1) selon la revendication 3, **caractérisé par le fait que** ledit épaulement annulaire d'appui a été formé avant le finissage de la bague extérieure (42).

**5.** Joint rotatif homocinétique (1) selon la revendication 3, **caractérisé par le fait que** ledit épaulement annulaire d'appui a été formé après le finissage de la bague extérieure (42).

**6.** Joint rotatif homocinétique selon la revendication 1, **caractérisé par le fait que** ladite bague intérieure (48) forme une butée interne de déplacement (10) et une butée externe de déplacement (11) qui s'étendent vers l'extérieur dans la direction radiale et qui limitent le mouvement de roulement des corps de roulement (46) sur la surface extérieure de ladite bague intérieure (48) dans la direction axiale.

**7.** Joint rotatif homocinétique (1) selon la revendication 6, **caractérisé par le fait que** l'une au moins parmi lesdites butées interne de déplacement (10) et externe de déplacement (11) est réalisée d'un seul tenant avec ladite bague intérieure (48).

8. Joint rotatif homocinétique (1) selon la revendication 7, **caractérisé par le fait que** la butée de déplacement (10) réalisée d'un seul tenant avec la bague intérieure (48) est formée comme épaulement annulaire d'appui.

9. Joint rotatif homocinétique (1) selon la revendication 8, **caractérisé par le fait que** ledit épaulement annulaire d'appui a été formé avant le finissage de la bague intérieure (48).

10. Joint rotatif homocinétique (1) selon la revendication 8, **caractérisé par le fait que** ledit épaulement annulaire d'appui a été formé après le finissage de la bague intérieure (48).

11. Joint rotatif homocinétique (1) selon la revendication 6, **caractérisé par le fait qu'**au moins une butée de déplacement (10, 11) ne s'étend pas sur le contour intérieur de ladite bague extérieure (42).

12. Joint rotatif homocinétique (1) selon la revendication 1 ou 6, **caractérisé par le fait que** ladite bague intérieure (48) est réalisée en une seule pièce.

13. Joint rotatif homocinétique (1) selon la revendication 1 ou 6, **caractérisé par le fait que** la distance d des butées de déplacement (10, 11) est supérieure à la longueur L des corps de roulement (46).

14. Joint rotatif homocinétique (1) selon la revendication 1 ou 6, **caractérisé par le fait que** l'une au moins parmi lesdites butées interne de déplacement (10) et externe de déplacement (11) est formée en tant que circlip réalisé séparément.

Fig. 1

Stand der Technik

Fig. 2

Stand der Technik

14

Fig. 3

Stand der Technik

Fig. 4

Fig.5

Fig. 6

Fig. 7

Fig. 8

Fig. 9

Fig. 10

Fig. 11

Fig. 12

EP 2 391 832 B1

Fig. 13

Fig. 14

Fig. 15

19

**Fig. 16**

**Fig. 17**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1413787 A
- DE 10325116 A1
- DE 10206733 A1
- DE 10325116 A